# EUROPEAN PATENT APPLICATION

(11) **EP 4 451 190 A1**
(43) Date of publication of application: **23.10.2024**
(21) Application number: 23020186.5
(22) Date of filing: 18.04.2023
(51) Int. Cl.: G06Q 20/02, G06Q 20/06, G06Q 20/36, G06Q 20/38, H04L 9/08

(54) **RECOVERY UNIT, SECURE TRANSACTION UNIT, TOKEN REFERENCE REGISTER AND ELECTRONIC PAYMENT TRANSACTION SYSTEM**

(71) Applicant: Giesecke+Devrient advance52 GmbH, 81677 München (DE)
(72) Inventor: Sequeria, Severino, 81677 München (DE)
(74) Representative: Giesecke+Devrient IP

(57) **Abstract**

The invention relates to a secure transaction unit configured to perform electronic payment transactions for a participant in an electronic payment system (TS), the secure transaction unit (TU) comprising:
- means for receiving and transmitting one or more tokens (T) to one or more other secure transaction unit (TU) in the electronic payment transaction system (TS) to cause an exchange of the one or more tokens (T) between secure transaction units (TU) in the electronic transaction system (TS), wherein each token (T) comprises at least a monetary value (v) and a private key (r) of a token-individual key pair;
- means for generating one or more token recovery data sets (TRD), each token recovery data set (TRD) being uniquely assigned to one or more tokens (T) being managed by the secure transaction unit (TU) at the time of generating the token recovery data set (TRD),
- means for transmitting the one or more token recovery data sets (TRD) to a recovery unit (RU), the recovery unit (RU) being managed by the participant or by a service provider unit (SPU). The invention further relates to a recovery unit (RU) in the electronic payment transaction system (TS), the recovery unit (RU) comprising means for receiving and storing a plurality of token recovery data sets (TRD), each token recovery data set (TRD) being uniquely assigned to one or more tokens (T) being managed by one of a plurality of secure transaction units (TU) at the time of generating the respective token recovery data set (TRD), wherein the token recovery data set (TRD) is read to block and/or to recover the one or more tokens (T) upon request.

## Description

The invention relates to a recovery unit. The invention further relates to a secure transaction unit. The invention also relates to a token reference register. The invention also relates to an electronic transaction system in particular an electronic payment transaction system.

Tokens - also referred to as digital assets, electronic coins, coin data sets - may represent any digital asset, in particular a digital currency, preferably a central bank digital currency, short CBDC. These tokens are issued and deleted by an issuing unit of the payment transaction system, such as an issuing authority, or a central bank unit or a commercial bank unit, hereinafter also referred to as secure token issuing unit.

Electronic token transactions and/or storage of tokens and any associated transaction data and/or storage data in an electronic payment transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

There are different technical approaches for a digital asset such as CBDC, issued by a central bank.

According to a first approach, tokens are merely cryptographically secured by the central bank unit and the cryptographically secured tokens are exchanged directly between token transaction units - also referred to as secure wallets and/or secure elements - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 tokens are stored in a local secure transaction unit (also referred to as local token management unit, wallet, payment application unit, or secure element) to be directly exchanged between participants in an electronic payment transaction system. The exchanged/transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token reference register stores token references of all valid tokens without knowing the tokens itself. So, the user can check validity of a received token. The token reference register only stores token references of the corresponding token. Tokens can be further modified by each participant of the payment transaction system, e.g., ownership of tokens can be switched from one participant to another participant (SWITCH modification), tokens can be split into two or more tokens, e.g., for obtaining a token with reduced monetary value (SPLIT modification) and/or two or more tokens can be merged to a single token, e.g., for obtaining a token with a higher monetary value (MERGE modification). Digital signatures are used to further enhance the security.

The electronic payment transaction system according to the third approach may comprise a plurality of secure transaction units, each being assigned to a specific participant in the electronic payment transaction system. There may be a plurality of transaction unit issuers, e.g., commercial bank units. There may be a plurality of transaction unit operators.

The secure transaction units, such as secure elements, smart cards, local wallets, software applications hosted at a terminal device of a participant may have malfunctions, may be broken, or may be stolen or may be lost. Tokens that are hosted by such lost secure transaction unit, e.g. tokens that reside in such a secure transaction unit, or tokens to which a secure transaction unit has exclusive access rights, valid in the electronic payment system. Since the owner of the token is unable to access the tokens, he may suffer a significant monetary (financial) damage, because the monetary value is blocked in inaccessible tokens. In addition, in case the transaction unit is stolen, a theft may use the tokens to perform transactions as a fraud.

Transaction units may for the purpose of data redundancy store copies of the token from their storage unit in another storage unit, such as an external USB flash drive or an online storage (cloud storage). To secure these token copies, an encryption scheme may be applied.

So, there is a need that valid tokens can be recovered once a transaction unit is unreachable or not accessible, malfunctioning, stolen or lost. It is important that token elements of the token are not revealed to ensure data protection and data integrity as well as security within the transaction system. In addition, a fraud should be detectable when a payment is performed with a stolen transaction unit. However, anonymity in the transaction system must be always ensured and must not be reduced. It should also be possible that tokens of a stolen, destroyed, or malfunctioning transaction unit are blocked for future payments and may be recovered without reducing anonymity to avoid a financial damage to the participant to whom the transaction unit is assigned.

The above-identified objectives are solved with the features of the independent patent claims. Further advantageous embodiments are described in the dependent patent claims.

In an aspect of the present invention there is provided a recovery unit in an electronic payment transaction system.

The recovery unit comprising means for receiving and storing a plurality of token recovery data sets, each token recovery data set being uniquely assigned to one or more tokens being managed by one of a plurality of secure transaction units at the time of generating the respective token recovery data set. The token recovery data set is read to block and/or to recover the one or more tokens upon request.

The token recovery data set is a set of data that represents information related to token(s) that are managed by the secure transaction unit at the time when the data set is generated. This data set can be considered as a token status information per secure transaction unit. This data set can also be considered as an assignment information that represents an information which token are assigned to a transaction unit.

The data set refers to tokens that are managed by the secure transaction unit, which may be seen as tokens that reside in a storage unit of that secure transaction unit, or are stored under the control of the secure transaction unit, or are owned (possessed) by a participant to which that secure transaction is assigned, or that are hosted by that secure transaction unit.

The token recovery data set may be read to block tokens upon request. Blocking the token may mean that these tokens are flagged or indicated as not for use for a payment transaction. In other words, a blocked token cannot be used for a payment transaction.

The token recovery data set may be read to recover the one or more tokens. Recovering the tokens may mean that new tokens may be provided (or tokens re-issued) having at least one or more token elements being identical to the one or more token elements of the tokens assigned to the token recovery data set. Specifically, the monetary value of the one or more token being provided (or re-issued or newly issued) is identical to the monetary value of the one or more tokens assigned to the token recovery data set.

The token recovery data set is read to block and/or to recover the one or more tokens upon request. The request may be initiated by a participant to which the transaction unit is assigned. The request may indicate the loss of the transaction unit to the recovery unit. The request may indicate the malfunction of the transaction unit to the recovery unit.

The recovery unit may be a financial service provider unit. The financial service provider unit may be configured to issue and/or manage at least the one of the plurality of secure transaction units. In an implementation, the financial service provider unit may be configured to issue and/or manage a subset of the plurality of secure transaction units, the subset being smaller than the plurality of secure transaction units, whose data recovery data sets being managed by the recovery unit (the financial service provider unit). In an implementation, the financial service provider unit may be configured to issue and/ or manage the plurality of secure transaction units, meaning the entirety of the plurality of secure transaction units, whose data recovery data sets being managed by the recovery unit (the financial service provider unit).

Preferably, the recovery unit hosts or stores or manages a plurality of token recovery data sets of a plurality of transaction units that are assigned to different participants in the transaction system.

There may be a plurality of recovery units in the electronic transaction system.

The token recovery data set is read by the financial service provider unit upon request from the participant in the electronic payment transaction system to whom the one of a plurality of secure transaction units is assigned. This may be initiated for blocking or recovering the one or more tokens.

Each token recovery data set may comprise one or more token references that are uniquely assigned to the one or more tokens at the time of generating the token recovery data set. The recovery data set preferably further comprising a secure transaction unit identifier for uniquely identifying the at least one secure transaction unit. The secure transaction unit identifier may be referred to as wallet-ID that may be unique in the electronic payment system.

Each token may comprise a monetary value and a private key of the token-individual key pair as token-individual token elements. One or more token references may comprise the monetary value of the assigned token and a public key corresponding to a private key of the token-individual key pair. So, the unique assignment between token and token reference is the token-individual key pair.

The token recovery data set may be signed with a private key of a token of the one or more tokens that is to be blocked and/or recovered. Preferably, the recovery data set comprises for each token reference of the recovery data set a signature of only the single token reference with the private key of the token.

The token recovery data set may be a registration request, particularly on or more registration requests, preferably one registration request for each token reference of the recovery data set.

The token recovery data set may be updated whenever a registration request is sent to a token reference register. So, the token recovery data set is kept on an actual basis and whenever a payment transaction is to be registered at the token reference register of the electronic payment transaction system (a registration request is sent), the token recovery data set is updated accordingly.

The token recovery data set may be updated whenever a payment transaction involving the secure transaction units is performed in the electronic payment transaction system.

The token recovery data set may be updated whenever an update command is received from the secure transaction units.

The recovery unit being a financial service provider unit may be configured to generate a registration request concerning a token to be blocked for a token reference register, wherein the registration request comprises a switch command that is signed with a private key of the financial service provider unit.

In another aspect of the present invention there is provided a secure transaction unit for performing payment transactions for a participant in an electronic payment transaction system.

The secure transaction unit comprises means for receiving and transmitting one or more tokens to one or more other secure transaction unit in the electronic payment transaction system to cause an exchange of the one or more tokens between secure transaction units in the electronic transaction system. Each token comprises at least a monetary value and a private key of a token-individual key pair as token elements.

The secure transaction unit further comprises means for generating one or more token recovery data sets. Each token recovery data set being uniquely assigned to one or more tokens being managed by the secure transaction unit at the time of generating the token recovery data set.

The secure transaction unit further comprises means for transmitting the one or more token recovery data sets to a recovery unit, the recovery unit being managed by the participant or by a service provider unit. Here, the recovery unit is associated with one participant and thus, it is managed (only) by the one participant who is also managing the secure transaction unit. So, there is a one-to-one relationship between the participant assigned to the secure transaction unit (or vice versa) and the recovery unit.

Preferably, the recovery unit is the recovery unit as described above that hosts a plurality of recovery data sets of a plurality of transaction units assigned to different participants in the transaction system.

The secure transaction unit further comprises means for transmitting one or more registration requests to a token reference register of the electronic transaction system, wherein each registration request comprises one or more token references. The registration requests are also referred to as replacement requests and are used to register modifications of a token in the token reference register.

Each token reference is uniquely assigned to a token.

One or more token references of a registration request comprise the monetary value of the assigned token and a public key corresponding to the private key of the token-individual key pair.

Token references assigned to tokens of the secure transaction unit and currently residing in the secure transaction unit are transmitted as the token recovery data set to the recovery unit.

The means for generating one or more token recovery data sets may be further configured to generate a void registration request, also referred to as no-operation, NOOP, command to the service provider unit or the token reference register. The void registration request preferably being signed with the private key of the one token being part of the void registration request. The token recovery data set particularly comprises a void registration request for each token reference of the token recovery data. So, a transaction unit may automatically update the token reference data in accordance with its recent payment transactions using registration requests. The token reference register has token references that are assigned to the tokens in the transaction unit at that point in time. Either these registration requests are stored as token recovery data sets in the recovery unit or void commands may be used as a NOOP (no operation command), to receive the token references in the recovery unit. So, it is possible to save this "state" in a CBDC service/ system.

The means for generating one or more token recovery data sets may be further configured to generate each token recovery data set as a list of token references of one or more tokens that are currently managed by the secure transaction unit.

The secure transaction unit may be configured to generate protocol data related to payment transactions performed between the secure transaction unit and other secure transaction units, wherein the protocol data being sent to a protocol data register in the electronic payment transaction system.

The token may be an asset token. The token may be a currency token. The token may be a central bank issued token, such as a CBDC. The token may be a digital currency token from other commercial issuers.

With this secure transaction unit, the registering of token references remains an anonymous process, because the token reference register does not obtain information about the owner of the token, e.g., the sender or receiver of the individual token. In contrast, only a group identifier is part of the token reference, which does not carry any information about an individual secure transaction unit of the sender or receiver of a token exchange, e.g., a payment transaction.

It may be that the token recovery data set is inserted into the recovery unit as a plurality of registration requests, preferably a sequence of registration requests, forwarded by the secure transaction unit in a batch operation. So, the service provider unit is configured to perform a batch operation to provide the token recovery data set into a plurality of token references, being a stack (the batch).

Here, the service provider unit may be configured to obtain the token recovery data set.

The service provider unit - after having received the token recovery data set - may generate a service-provider-unit-replacement-request, short SPU-replacement request (also SPU-registration request) - to register the token reference at the token reference register. Since the service provider unit is not in possession or in knowledge of the private key as the token element of the token, it is not possible for the SPU to sign the registration request using this private key. In contrast, the SPU performs the SPU-replacement request, in which a new private key is generated by the SPU and a public key thereof is create (see switch-command in WO 2020 / 212 331 A1 and WO 2020 / 212 331 A1 for greater details). The newly generated token reference is used in the SPU-replacement request. Since the new private key is known to the SPU, the SPU-replacement request can be signed with the new private key to increase the security of the transaction system.

The control means of the secure transaction unit is further configured to generate one or more token references of a registration request based on modification commands (replacement requests) being processed by the secure transaction unit, the modification commands being preferably one or more of a switch-command, a merge-command and a split-command, wherein the modification commands are only performed for tokens having the same token-type information. For further details related to these modification commands it is referred to WO 2020 / 212 331 A1 and WO 2020 / 212 331 A1.

In an embodiment, the secure transaction unit is a secure element that is operatively connected to an electronic terminal device of a participant in the electronic payment system. In an alternative embodiment, the secure transaction unit is a secure wallet that is hosted at a service provider unit.

The control means may be configured to access a token storage, preferably a token storage of the secure transaction unit.

The secure transaction unit may comprise a token storage as a physical entity. The secure transaction unit may be configured to access the token storage. The token storage may be a token vault of this secure transaction unit. Each secure transaction unit in the transaction system may comprise its own token storage.

From such token storage accessible by the secure transaction unit, each token can be transferred to any other secure transaction unit, e.g., owned by a customer of the secure transaction unit.

The secure transaction unit may be a secure wallet that may be a hardware security module built in hardware or software to enable tamperproof and secure access to the tokens.

The service provider unit having a storage unit being configured to store protocol data of one or more payment transactions involving secure transaction units being issued by this particular service provider unit or being managed by this particular service provider unit, wherein the protocol data comprise the one or more token references of the tokens involved in the payment transaction.

The protocol data may be used for a surveillance of payment transactions within the electronic payment transaction system, wherein the protocol data and/or the registration requests are used for fraud detection. A comparison between protocol data and registration requests is made and based on a data reduction scheme, fraud can be detected. So, an efficient and anonymous payment system surveillance system can be achieved.

In an embodiment, a transaction unit group identifier may be used for a lost-card-recovery, which is a synonym for a broken, malicious, malfunctioning secure transaction unit. The transaction unit group identifier uses the information of the initially loaded new tokens and a recovery may be delayed until a certain waiting period is over.

The protocol data is per se independent on the registration requests. This means, offline and online transaction may lead to a token reference register status that is not following the status of the payment system. Using the protocol data with the transaction unit group identifier enables to receive additional information that is more accurate than the token reference register status.

The control means of the service provider unit may be configured to generate a registration request for a switch-command, in which a registered token reference is replaced by a new token reference, wherein the registration request comprises a signature of the service provider unit instead of a signature based on the private key of the token-individual key pair of the token reference. This switch-command may be referred to as a service provider unit replacement request that may be able to trigger a replacement of token references in the token reference register without knowing the private key of the token individual key pair. This request may contain a service provider unit digital signature in the replacement request to exchange the old token reference with the new token reference by performing the switch modification. This switch-modification command may be executed only if the old token reference is valid, a transaction unit group identifier is registered, and the digital signature comes from the service provider unit having the transaction unit group identifier. As an alternative, token may be blocked in the token reference register.

In another aspect of the invention, an electronic payment transaction system comprises a plurality of secure transaction units as described above. The transaction system further comprises a plurality of recovery units each being a financial service provider as described above and storing a plurality of token recovery data sets. There is one or more token registers for registering tokens in the electronic transaction system and there is one or more protocol data registers for storing protocol data of payment transactions performed between secure transaction units.

Upon recovery request from a participant of the electronic payment transaction unit, the respective token recovery data set in the recovery unit may be read by the financial service provider and one or more registration requests concerning one or more tokens may be blocked being generated by the service provider unit to be transmitted to the one or more token reference registers, wherein each registration requests comprises a switch command that is signed with a private key of the financial service provider unit. So, a previous token reference may not be deleted in the token reference register, it may be shifted to another storage unit for detection a fraud behavior of another participant that may illegally become in possession of the tokens.

Upon recovery request from a participant of the electronic payment transaction unit and a predefined time period being lapsed, the service provider unit may be configured to provide one or more new (recovered) tokens/issue new tokens to the participant. The new token - as explained above - may be a re-issued token or at least a token with identical at least one or more token elements, especially an identical monetary amount.

In another aspect of the invention, a token reference register for registering of token of an electronic payment transaction system may be provided.

The token reference register comprises one or more storage units for storing token references for registering tokens in the electronic payment transaction system. Each token comprises at least a monetary value and a private key of a token-individual key pair as token elements.

The token reference register comprises one or more fraud detection units for storing token references based on a recovery request for registering tokens in the electronic payment transaction system for registering tokens to be recovered in the electronic payment transaction system.

Each stored token reference in the token reference register comprises the monetary value of the token and a public key corresponding to the private key of the token-individual key pair.

At least a subgroup of token references in the token reference register further comprises a transaction unit group identifier as a token reference element.

The transaction unit group identifier may be stored as a part of protocol data of a payment transaction in the token reference register.

The token reference register further comprises one or more verification units for verifying whether the token reference of a receive registration request is stored in the token reference register. Each token reference may be uniquely assigned to a token.

Each stored token reference in the token reference register comprises the monetary value of the token and a public key corresponding to the private key of the token-individual key pair.

At least a subgroup of token references in the token reference register further comprises a transaction unit group identifier as a token reference element.

The storage unit is further configured to store token references of modified tokens based on a modification command (as part of a registration request), preferably a switch-command, a merge-command, and/ or a split-command, wherein a token reference of the modification command is stored only in a case all tokens involved in the modification command comprise the same token-type information.

The token reference register is a unit of the electronic payment transaction system that stores token references, whereby the associated tokens are registered. This token reference register can be a central database or storage unit of the electronic payment transaction system. This token reference register may be a decentralized ledger, for example in a blockchain topology. The token reference register may maintain a history of token references and/or registration requests.

The verifying unit is configured to reject a registration request which comprises token references with different token-type information.

The basic principle of registering a token is that a received registration request is verified by the token reference register to see whether the token reference assigned to the token is already known in the token reference register. If the token reference is already known, it is not stored again. If the token reference is not known, it is entered (stored) in the token reference register to be available for future verification and check steps in the secure payment transaction system.

A token reference is stored only once in the token reference register. Since a token reference of a token exists only once in the transaction system, the verifying unit can determine whether an attempt was made to spend a token more than once.

The token reference comprises the monetary value of the uniquely assigned token. This monetary value can be used to further validate the registration request at the token reference register.

In the verifying unit it may additionally be determined whether the token reference of the received registration request can be assigned to a token of the electronic payment transaction system. For this purpose, the token reference or a derivative of the token reference or a history for the token reference must be stored in the token reference register, which can be assigned to the token reference of the received registration request.

It may additionally or alternatively be determined by the verifying unit of the token reference register whether the received registration request is syntactically correct, e.g. by validating a digital signature of the registration request. This is used, for example, to check whether the registration request is plausible, whether a command type was correctly specified in the registration request, whether the token uniquely assigned to the token reference exists (can exist); and/or whether a difference of monetary values of tokens in the registration request matches a command type specified in the registration request.

In one embodiment, the verifying unit is configured to determine whether a signature of the registration request is correct.

The electronic payment transaction system may further comprise a secure token issuing unit that comprises a minting unit configured to generate a new token to be issued in the electronic transaction system; and a melting unit configured to delete tokens to be deleted from the electronic transaction system; a plurality of secure transaction units as described above; one or more token register for registering the tokens of the electronic transaction system as described above; and one or more protocol data register for storing protocol data of payment transactions between secure transaction units.

In a further aspect there is provided a method for registering of token using a secure transaction unit as described above.

The use of a token reference is not comparable to the use of addresses of subscriber entities in a blockchain-based transaction system, as no addresses of subscriber entities are used in the token reference register according to the invention to prevent traceability of the tokens.

In one embodiment, the received registration request is signed with the private key of the token-individual key pair to be able to check or verify a unique assignment of the token reference to the token. If the verification in the verifying unit is successful, i.e., the signature can be verified, then the sender of the registration request must be in possession of or must be aware of the token. This makes it possible to detect a fraud attempt with non-existent tokens or unauthorized generated tokens.

The use of multiple verification units enables parallel processing of registration requests and speeds up registration in the transaction system. The verification unit(s) compares, for example, a command type of the received registration request with the token values of the received registration request. If a command type is expected not to add token values to or subtract token values from the transaction system, it verifies that this is met with the token values of the received token references. If verification fails, fraud is detected, and a (wrong) registration is prevented.

Each combination and also the insertion as named herein may be referred to as a concatenation, which is a logical combination used in information technology.

Each token comprises a monetary value as a first token element. The monetary value may be a data that represents money usable in one or more electronic payment transaction.

Each token further comprises a private key as a second token element. The private key may be referred to as a blinding value (e.g. obfuscation amount) or may be a random number or may be a secret that is not known to participants not involved in a transaction. The private key may be a private key of a token-individual key pair.

In addition, each token may have further token elements as outlined below and may also have further token elements such as further metadata, e.g., currency data that indicates the currency which the monetary amount represents and/or validity data and/or timestamp data. Token of different token-type may have the same currency data, thus they may belong to the same currency.

The token may also be referred to as value note within this disclosure. The token can be used in online and offline payment transactions. The token may represent central bank digital currency, CBDC.

The token may comprise one or more token-individual history entries as a further token element. One history entry may represent one modification, such as SWITCH, SPLIT, MERGE, performed with this token. Such a further token element may also be referred to as history data.

It is possible to use tokens exclusively in offline electronic payment transactions between two directly communicating secure token managing units (e.g., secure elements) within the electronic payment transaction system.

An online electronic payment transaction payment is defined herein as a transaction in which a secure wallet (e.g. in a secure element) that participates in the transaction, e.g. the secure wallet that initiates the token transfer (payer) or the secure wallet that receives a token (payee), has access and can communicate with one or more remote instances of the electronic payment system, such as a token register, a transaction register, a token issuing unit, a service provider unit such as financial service provider (FSP) via classical internet or mobile communication means or any other suitable online communication protocol. So, immediately before, while or after performing the transaction, also a registration of the transaction by storing a respective token reference in a remote token register is performed by one of the secure wallets involved in the transaction.

An offline electronic payment transaction payment is defined herein as a direct transaction between two secure wallets (e.g. residing in secure elements) that participate in the transaction, e.g. the secure wallet that initiates the token transfer (payer) and/or the secure wallet that receives a token (payee). At least one of payer or payee has no access and cannot communicate with remote instances of the transaction system, such as a token register, a transaction register, a token issuing unit and/or a service provider unit, such as financial service provider (FSP) via classical internet or mobile communication means. The token transfer may then take place by local wireless communication means, such as Bluetooth, NFC, or any other suitable wireless communication protocol. The token transfer may also take place by contact-based communication means, such as USB, ISO 7816, or any other suitable contact-based communication protocol.

For a registration of a token in the token register, a token reference of the token may be generated. Each token reference comprises a hash value as a token reference element and may further have the monetary value of the token as another token reference element.

A token "managed by" a token transaction unit, such as the above-described secure wallets, is a token that resides in a memory (storage) space. The memory space can be an internal memory space of the token management unit, or it can be an external memory space to which the token management unit has exclusive access rights. This memory space can include a remote memory space, such as a cloud memory (storage) space.

Implementation of modifications to tokens can be performed with the known payment transactions of WO 2020/212 337 A1; WO 2020/212 331 A1; WO 2021 /170 646 A1 and WO 2021 / 170 645 A1 protocols.

A corresponding token reference is (uniquely) associated with each token in the method and payment transaction system. Knowledge of a token reference does not authorize issuing of the digital money represented by the token. This represents a key difference between token references and tokens. A token reference is unique and also uniquely associated with one token, so there is a 1-to-1 relationship between the token and the token reference. The token reference can be computed by each participant, such as a secure wallet (e.g. in a secure element) of a participant in the electronic payment system. The computing is preferably performed by the control means.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure electronic payment transaction system for token transactions and storing recovery data according to the invention.
Fig. 2 shows another exemplary embodiment of a secure electronic payment transaction system for token transactions and storing recovery data according to the invention.
Fig. 3 shows another exemplary embodiment of a secure electronic payment transaction system for token transactions and their recovery according to the invention.
Fig. 4 shows another exemplary embodiment of a secure electronic payment transaction system for token transactions and their recovery according to the invention.
Fig. 5 shows another exemplary embodiment of a secure electronic payment transaction system for token transactions and their recovery and protocol data according to the invention.

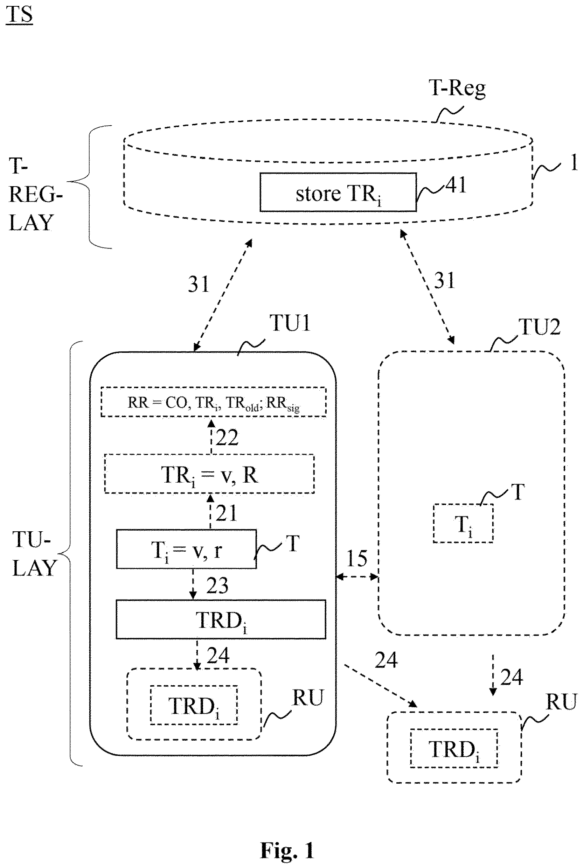

Fig. 1 shows an embodiment example of a secure electronic payment transaction system TS according to the invention. The transaction system TS comprises a register layer T-REG-LAY in which a token reference register T-Reg is arranged. The TS further comprises a direct transaction layer TU-LAY in which a plurality of transaction units TU may be provided, as an example, two transaction units TU1 and TU2 are shown in Fig. 1.

The transaction units TU of the transaction system TS are arranged to exchange 15 tokens T directly with each other. In the case of Fig. 1, the tokens Ti are payment tokens, which are also referred to as digital coins. Each token T may be issued by a token issuer of the TS and provided by a transaction unit TU-I of the token issuer (not shown in Fig. 1).

The TS of this invention comprises a plurality of transaction unit issuer, such as different financial service provider, each of them configured to issue or to operate a plurality of secure transaction units TU.

Each token T can be modified, such as split, merged or switched, by applying modification-commands by each transaction unit TU. These modifications are compliant with the above described third approach and it is refrained from repeating these modifications here again. Each modification can be registered in the T-Reg by replacement requests (registration commands). Tokens T can be generated by a token issuer and can also be deleted by the token issuer. A transaction unit of the token issuer is, for example, adapted to issue the tokens to a commercial bank.

A token T is uniquely represented by a monetary value v as well as a random number r. Thus, each token T in this TS has at least two token elements.

The monetary value v as a first mandatory token element can be specified in a range of values from 1 to 2³¹-1. The random number r may be a number in the range of 0 to 2²⁵⁶ - 1, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

A transaction unit TU has exclusive access to a storage unit (vault) or includes a token memory in a data store of the transaction units TU.

A token T may be stored as a TLV encoded record in a token store and then has a unique tag and length information, for example, in the following format.

For each token T, a token reference TR can be stored in the token reference register T-Reg. The token reference TR comprises the monetary value v (of the token T) and a public key R that corresponds to the private key r of the token-individual key pair. A subset (subgroup) of the TR may also comprise a transaction unit group identifier (not shown). The token reference TR of the token T can be viewed at any time in the register T-Reg of the transaction system TS.

This token reference TR can be sent 31 to the token reference register T-Reg in form of a registration request RR (being generated in step 22), if necessary, together with a modification command regarding the token T.

In step 23, the TU1 also generates a token recovery data set TRD. The TRD may be the same as the RR generated in step 22. Alternatively, the TRD is the TR, generated in step 21. Alternatively, the TRD is an image of all TR representing all tokens T in the TU1.

The TRD is stored in step 24 in a recovery unit RU. The RU may be a dedicated storage unit inside the TU1. Alternatively, the RU may be an external storage unit, such as a flash memory or a cloud memory.

The RU may be external from the TU, but may be inside a device that is owned by the participant to whom the TU is assigned.

The RU may be an exclusive unit for the participant and so, the TRD stored therein, refer to the tokens T that are assigned to the participant and managed by the TU1.

Alternatively, the RU may store TRD of a plurality of TUs, as indicated with the arrow 24 from TU1 and TU2.

The TRD can now be used to recover tokens T in case, the TU1 is stolen, has a malfunction, is broken or lost.

If the token reference TR is sent 31 to the token reference register T-Reg, a control means of the TU may insert the TUGI. The TUGI may be inserted in just one of the TR that are part of a RR or it can be inserted in all TR that are generated by this particular TU.

The registration request RR and/or the TRD can be signed with the private key r. Signing makes it possible to verify that the sender TU1 of the token reference TR was in possession of the token T, further enhancing security in the transaction system TS.

The registration request RR related to switch, split and merge modification may include the modification command CO, a new token reference TRᵢ of a token Tᵢ to be registered and an old token reference TR_{old} of a token T to be removed from the token reference register T-Reg. The registration request RR may also comprise a signed registration request RR_{sig}, which is the RR signed with the private part r of the new token Tᵢ.

In the transaction unit TU1, the signed registration request RR_sig may be stored as a socalled PROOF and as the TRDᵢ.

This registration request RR can be sent 31 to the token reference register T-Reg. This registration request RR is received in the token reference register T-Reg. After the registration request RR has been checked by the token reference register T-Reg, the token reference TR is stored in the token reference register T-Reg, whereby the token T is registered in the transaction system TS and an old token reference TR is deleted from the token reference register T-Reg.

This token reference TR and the TRD are uniquely assigned to the token T. The TR is used to register the token T in the transaction system TS. The TRD is used to recover the token T once broken or stolen or not accessible. The token reference TR and the TRD are therefore the public representation of the token T from the transaction layer TU-LAY. Sole knowledge or possession of the token reference TR or the TRD alone does not allow the token T to be transferred and is not equivalent to the TU1 being in possession of the token T. The token reference TR is used to prevent multiple spending attempts and checks whether token values v have been generated in an improper manner. Therefore, the token reference TR and, if applicable, the history about the tokens T and the corresponding registration requests RR from TU(s) are stored in the token reference register T-Reg.

The TRD is further used to block 32 and/or to recover 33 the T once requested. The request is initiated by the participant as will be explained below.

The tokens T are stored, for example, in a secure wallet, as the TU. These wallets are, for example, software applications within the electronic terminal device in which the TU is operationally embedded. A wallet may be set up as an application on a smartphone, smart card or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

A transaction with a TU does not require a communication link to the token reference register T-Reg of the transaction system TS. The transaction system TS is set up to perform a transaction offline, i.e., without a communication link to the token reference register T-Reg. A corresponding registration of token T may therefore be temporally downstream of a transfer of token T to a TU.

The token reference register T-Reg is a unit of the transaction system TS and is either a central register or database of the transaction system TS or a decentralized register or database (DLT) of the transaction system TS.

The public part R of the token individual key pair is generated by applying a cryptographic function to the private part r of the token individual key pair. This function is difficult to reverse and thus provides the transaction system TS with the required security. It holds that R = r * G, where G can be, for example, a global parameter of the transaction system TS, e.g., a generator point of an elliptic curve, here the secp256r1 curve. Any other suitable cryptographic function to receive the R value can be applied as well.

The TU1 may be issued or operated by a service provider unit SPU1 and so, the TUGI of TU1 may be an identifier to uniquely identify SPU1.

The TU2 may be issued or operated by a service provider unit SPU2 that is different from SPU1 and so, the TUGI of TU1 may be an identifier to uniquely identify SPU1.

The TR being transferred 31 to the T-Reg may comprise the TUGI. So, it is possible to include a fraud detection, a surveillance system and a lost-card-recovery system without decreasing anonymity within the TS.

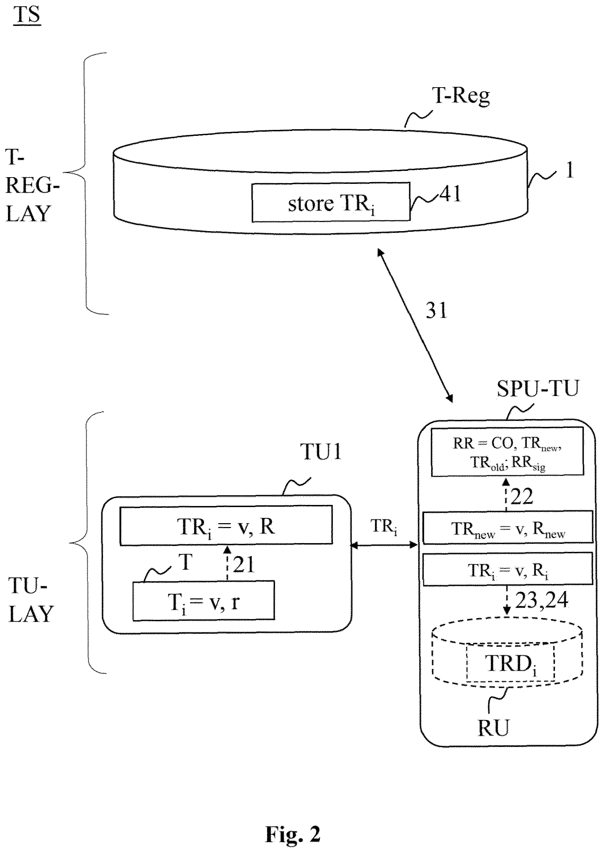

Fig. 2 shows another exemplary embodiment of a transaction system TS of the invention.

Here, the TU1 may generate 21 the TRᵢ. The TRᵢ is sent to the SPU-TU that is the transaction unit TU of the financial service provider unit SPU. This SPU generates the RR in step 22 and the may transfer T to TU1. TU2 is operated by SPU2 (not shown) and TU1 is operated by SPU1, the TU of SPU1 is shown in Fig. 2 as SPU-TU.

The token Tᵢ may be transferred 15 between TU2 (not shown) during a payment transaction. TU1 now generates a TRᵢ in step 21 as known from WO 2020 / 212 331 A1 and WO 2020 / 212 331 A1 and it is not further repeated here.

The payment transaction between TU1 and TU2 may also be protocolled with protocol data PROT (not shown). The PROT may include the TUGI of the TU1 and this PROT may be provided to the T-Reg (not shown) and may be stored there. The PROT may include a timestamp of the transaction of T between TU1 and TU2 and the TR_{old} and the TRᵢ.

More preferred, the TRᵢ is transmitted from TU1 to SPU-TU. The SPU generates 23 and stores 24 the TRDᵢ in the RU being part of the SPU-TU. Since the SPU is not in possession or in knowledge of the private key r as the token element of the token Tᵢ, it is not possible for the SPU to sign the RR using this private key r of that Tᵢ. In contrast, the SPU may perform a SPU-replacement request, in which a new private key is generated by the SPU and a R_{new} thereof is create (see switch-command in WO 2020 / 212 331 A1 and WO 2020 / 212 331 A1 for greater details). The TUGI may also be inserted in this newly generated TR_{new} (generated by the SPU). This TR_{new} is used in the SPU-replacement request to register the Tᵢ. Since the new private key r_{new} is known to the SPU, the SPU-replacement request can be signed with the new private key r_{new} to increase the security of the TS.

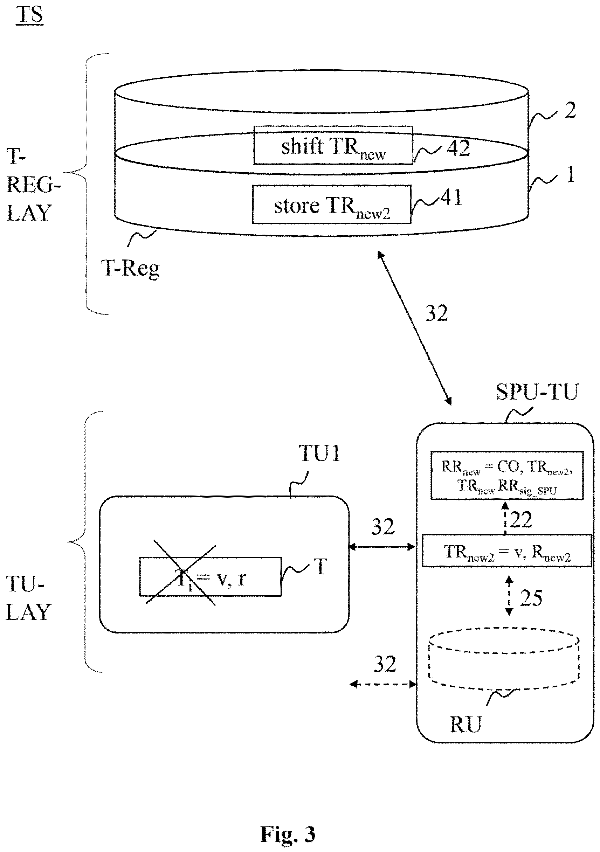

In Fig. 3, a further embodiment shows a secure electronic payment transaction system for token transactions and their recovery according to the invention. The system is like the system of Fig. 2 and further repetition thereof is omitted.

In the event that the Token Tᵢ is unreachable, e.g. because the TU1 has no access to the Ti e.g. because the storage unit in which Tᵢ is broken or the TU1 is stolen. Realizing this, the participant sends 32 a blocking request to assure that no one can use the Tᵢ in a fraud payment transaction. The blocking request 32 is transmitted to the SPU-TU. Here, the TRD of the RU is request to verify 25 whether the Tᵢ is managed by the TU1. In case, it is verified that the Tᵢ is managed by the TU1, an FSP-replacement request is performed in the SPU-TU by generating another new token reference TR_{new2} that is signed as explained in Fig. 2 and that is send to the T-Reg. There, the TR_{new} is replaced with the TR_{new2} and the blocked TR_{new} is shifted to the storage unit 42 of the T-Reg. So, any attempt to pay with the token Tᵢ by a theft or attacker and subsequent registering of the RR thereof by the theft or any subsequent token-owner, will be recognized in the T-Reg by analyzing the storage unit 42. Verifying the TR in the storage unit 42 may be part of the usual verification within the T-Reg to identify the fraud.

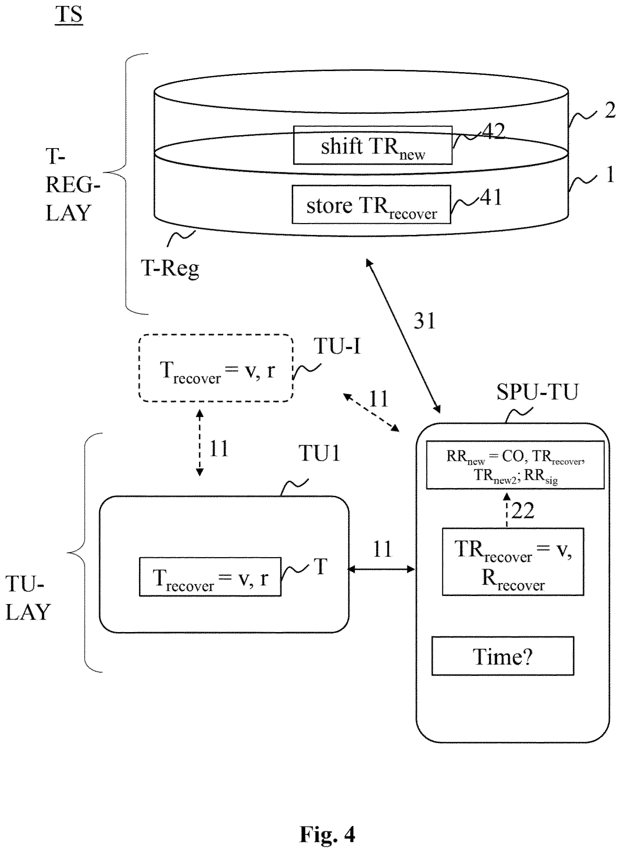

In Fig. 4, a further embodiment shows a secure electronic payment transaction system for token transactions and their recovery according to the invention. The system is like the system of Fig. 2 and Fig. 3 and so, further repetition thereof is omitted.

The SPU-TU may start a timer after sending the blocking request. Upon time-out of the timer, the transaction system is certain that the token T can be recovered (re-issued). Therefore, a recover token T_{recover} may be issued by the SPU-TU or a central token issuer TU-I. This T_{recover} may be issued 11 from the TU-I to the SPU-TU or the TU1. SPU-TU generates 22 another RR that is sent 31 to the T-Reg for registration. This TR_{recover} replaces the TR_{new2} in the T-Reg and so, the recovery token T_{recover} can be validly used in the TS.

The RR for the switch-command together with RR_{sig} is sent 31 to the T-Reg. In addition, PROT may be sent 32 to the T-Reg if the PROT are centrally stored there (not shown). Alternatively, a distinct central storage P-Reg is used to store the PROT.

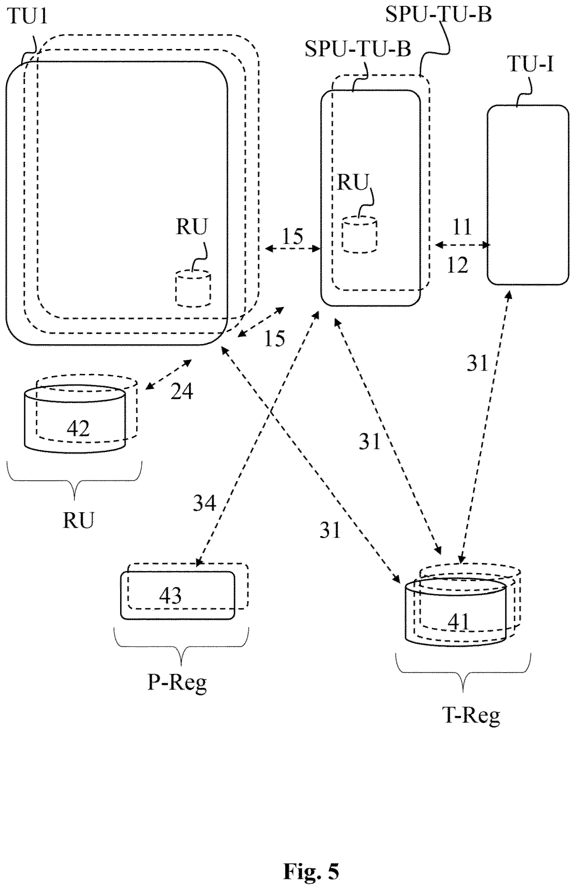

In Fig. 5, another TS using the recovery scheme and protocol data is shown.

In Fig. 5, it is indicated that a plurality of transaction units TU of service provider units SPU-A and SPU-B (here referred to as SPU-TU-A and SPU-TU-B) can be existing in the TS. These SPU-TU-A and SPU-TU-B may receive new tokens T from a token issuer TU-I e.g., a central bank. Tokens may be newly issued 11 or deleted 12.

These new tokens may be issued to the intermediate units, such as commercial banks SPU-A and SPU-B. These tokens may be used in direct token exchange 15 with costumers of the intermediate issuers SPU-A and SPU-B. The token exchange 15 is also performed between TUs, e.g. between TU1 and TU2 as shown and described in Figs. 1 and 2.

In Fig. 5 it is shown that a plurality of storage units may be provided in the token reference register T-Reg to accelerate the storing 41 of a plurality of token references TR. As expressed earlier, the TR in the T-Reg may include TUGI that are inserted by the SPU-TUx or the TU itself.

In another embodiment, the TR are sent 31 to the T-Reg from the TU or the SPU-TU. Upon authentication of TU or SPU-TU, the TUGI is inserted into a respective TR. A TU may not need an authentication at the T-Reg.

In Fig. 5 it is also shown that a P-Reg is used to store 43 PROT. These PROT may be used together with the RR in the T-Reg to enable a surveillance system, and/or an error recovery and/or a lost-card-recovery as shortly outlined in the following.

The PROT may be generated per each payment transaction in which T is transferred in the TU-LAY. The PROT may include one or more data fields. PROT are provided in one of the following formats:
PROT = (wID1, wID2, TR_{new})
PROT = (wID1, wID2, TR_{new}, TR_{old})
PROT = (wID1, wID2, v)
PROT = (hash(wID1), hash(wID2), v)
PROT = (hash(wID1), (hash(wID2), TR_{new}, TR_{old})

The wID1 is a unique TU identifier of the TU1. The wID2 is a unique identifier of the TU2. Instead of the wID, a hash function may be applied on the wID and only the resulting hash value may be inserted into the PROT.

In addition, a transaction number may be inserted in the PROT as well. One or more of the data fields of the PROT may be encrypted to increase the security within the TS.

Furthermore, T-Reg manages the storage location for the token references TR, shown here as database 1 as an example of a storage unit 1 in the token reference register T-Reg. As a representative example, the TR for the token T of the SPU-TU is entered in the database 1 upon replacement request 31. The replacement request 31 now comprises TR that includes TUGI as a further token reference element. Instead of inserting a TUGI by the TU1, a TUGI may be inserted in the SPU-TU (not shown).

Not shown in the Figs, the token reference register T-Reg may include at least one verification unit (=verifying unit). The verification unit of the token reference register T-Reg verifies registration requests RR. Thereby, a syntactical correctness or also the correct specification of a command in the registration request RR can be verified. Also, a history from old (past) registration requests RR concerning a token T can be verified. The separation of this verification unit from the database distributes the tasks of filing and checking and increases the speed in the token reference register T-Reg.

A registration request RR is preferably signed with the private part r. The signature allows a syntactic authenticity of the command to be easily checked by the receiver (T-Reg or the TU). This verification is preferably performed in the database or the verification unit. Furthermore, a register request RR can be syntactically validated, for example, by checking the signature and/or the token reference TR.

Even though a signature may be checked in a TU, this does not ensure that multiple issuances of the same token T have not been attempted. Therefore, registration in the token reference register T-Reg is provided. In addition, a secure hardware platform is maintained by the TU. With available connection to the token reference register T-Reg, the token references TR are transmitted, and the multiple issuance attempt can be detected in the token reference register T-Reg.

If a token reference TR is not yet known in the token reference register T-Reg, it is added.

The commands CO used for RR can be modifications of an existing token T, for example "switch", "split" or "merge" that are used in replacement requests 31. The commands "switch", "merge" and "split" can be integrated into replacement requests (registration requests RR) to register a modification of a token T at the T-Reg.

The RR may also include a signed registration request RR_{sig}. So, each registration request RR also has a signature to show that the TU is in possession of the associated token T. An ECDSA scheme can be applied as signature. The registration request RR is preferably signed with the private part r of the token T. As expressed earlier, the command types CO "Create", "Delete", "Split", "Switch" and "Merge" can be studied in WO 2020 / 212 331 A1 and WO 2020 / 212 331 A1 and it is avoided to repeat the functions or structure thereof.

It is proposes to send 23 a NOOP command to secure the tokens T in the TU, being an offline wallet, to subsequently lock the tokens T in case of loss of the offline wallet, which may be a lost card or a broken chip, and if necessary to refund them later after a waiting period TIME.

The SPU-TU then stores the TRD, which may include the respective TR that are uniquily assigned to the T in the wallet TU1. The token is not part of the TRD.

If no offline transactions take place or tokens are modified, the TRD in the SPU-TU (or the RU) matches the state in the TU1. Also, as soon as the TU sends its RR, the TRD in the SPU-TU is up to date.

In such a no-operation, NOOP-command, the TU1 signs the TR to prove that it has the associated private key r. The SPU-TU will not forward the NOOP command to the T-Reg or the T-Reg will discard the command. The SPU-TU stores the NOOP command as TRD as a proof of ownership of T in the TU1. In an alternative solution, the TU1 simply sends each time its current TR list, e.g. over a secure channel between TU1 and SPU-TU, to the SPU-TU.

As an alternative to locking (and waiting with later deletion) of the TR in the T-Reg, the SPU-TU-replacement request RR can be sent.

However, there may be further offline transactions or a replacement request RR from which the SPU-TU is not aware. So, the T-Reg reports for a TR on the validity or deactivation or RR that a TR in the T-Reg is not valid anymore.

In a first approach, the TS having several SPU-TU, such as SPU-TU-A, SPU-TU-B of Fig. 5, RR requests and/or PROT data concerning SPU-TUs may be forwarded from SPU-TU-A to SPU-TU-B. Preferably, partial data not concerning SPU-TU-A are anonymized, such as wallet ID of a transaction unit in the payment transaction and/or input-TR or output-TR are definitely not assigned to SPU-TU-A. SPU-TU-B and/or T-Reg and/or P-Reg may send the PROT or RR, respectively to SPU-TU-A individually or collectively on a predefined time-base, such as hourly or daily. For example, the T-Reg sends the RR to SPU-TU-A if RR does not come from SPU-TU-A but is identifiable in the SPU-TU-A. Another approach would be a selective SPU-TU information.

This is more complex than the first approach. The SPU-TU selectively requests information for one or more TRs of the TU and/or the wallet ID and receives either an evaluation result or a filter result. Optionally, the wallet ID (or its hash) can be additionally provided.

The evaluation result of PROT or PROT and RR may be that certain TRs are TRs of the TU.

The evaluation result of PROT or PROT and RR may also be that there are no TRs or that TRs cannot be determined. In this case, P-Reg and/or a T-Reg would have to have suitable data for the evaluation, e.g. a TR specification and wallet ID in the PROT and/or the PROT and RR data set. P-Reg and/or a T-Reg optionally filter internally its data and then evaluates whether there are TRs using its data.

A filter result would be a subset of the data present at P-Reg and/or a T-Reg that relates to successors of the TR and/or the wallet TU. The SPU-TU receives the filter result from one or more central instances and then evaluates itself based on the filter results and optionally its own PROT/RR data, which can be more detailed than the central PROT or RR data.

Since the PROT may be provided in different formats, such as:
PROT = (wID1, wID2, TR_{new})
PROT = (wID1, wID2, TR_{new}, TR_{old})
PROT = (wID1, wID2, v)
PROT = (hash(wID1), hash(wID2), v)
PROT = (hash(wID1), (hash(wID2), TR_{new}, TR_{old})

As can be seen from the different formats, it is possible that the SPU anonymizes the PROT of the TUs by (1) removing the public key R and/or (2) hashing the walletID. This way only the SPU is able to reproduce the TRs with successors, which may be branched several times.

The surveillance system and or the error recovery may be established according to the Figs. to detect a fraud, or an error as follows. The PROT increase the accuracy of the transaction history because a T-Reg may not be up to date in case, a plurality of offline transactions occurs in the TU-LAY without any registration request for a certain time period. So, in case a fraud detection should be possible, the T-Reg data, especially the TR registered in the T-Reg are now compared with the PROT data and it may be discovered that new money was created by fraud, or a token was spent more than once (double spending attack).

For a lost-card-recovery, which is synonymous for an unreachable TU or a malfunctioning TU, PROT and T-Reg data may now be used to set up the initial status of the malfunctioning or lost TU. It is recommended to wait a period of time before recovering the TU, because there may be offline transactions with tokens T of the malfunctioning or lost TU that are not registered in the T-Reg.

In addition, the link between a TU and its SPU-TU may be encrypted and may in addition include a mutual authentication before PROT or TR are transferred. In addition, the link between a T-Reg and a SPU-TU may be encrypted and may in addition include a mutual authentication before PROT or TR are transferred. None of these encryptions or authentications risks the anonymity of the entire transaction system TS.

It is further important to mention that the RR sent by the SPU-TUx can be handled in a batch operation. So, a plurality of RR (or TR) may be received by the SPU-TU and at a certain time of the day, e.g. a predefined time, such as 12a.m. or when a certain number of RR (or TR) is received at the SPU-TU, the SPU-TU inserts the TUGI to the entire batch and sends 31 the RRs in a batch operation to the T-Reg.

Such a batch operation can be performed for only a single TU, such as all RR in TU1 are handled as a batch operation.

Such a batch operation can be performed for a plurality of TUs, such as all RR in TU1 and TU2 are handled as a batch operation.

### REFERENCE SIGNS

- TS: Electronic (payment) transaction system
- TU: Transaction unit in TS, wallet
- RU: Recovery unit, storage unit
- TU-I: Transaction unit of a token issuer, central bank wallet
- SPU: Service Provider Unit, FSP)
- SPU-TU: Transaction unit of SPU, SPU-wallet
- T-Reg: Token Register
1 Storage unit
2 Fraud detection unit
3 Store TUGI
- T-Reg-LAY: Token registration layer
- TU-LAY: Token transfer layer
- RR: Registration request, replacement request
- T: Token
- TR: Token reference
- TRD: Token recovery data set
- v: Monetary value of T
- r: Secret, private key of token-individual key pair
- R: public key of token-individual key pair
- CO: Command
- RR_{sig}: signed RR
- wIDx: Identifier of TUx
- hash: hash value
- 11: new token issued
- 12: old tokens deleted
- 14: negotiate token-type
- 15: transfer of token
- 16: Transfer of token reference
- 21: Derive token reference
- 22: Generate RR
- 23: Generate TRD
- 24: Store TRD
- 25: Verify TRD
- 31: registration request, replacement request
- 32: Blocking request
- 33: Recovery request
- 34: protocol data request
- 41: Store TR
- 42: Store blocked TR
- 43: Store protocol data PROT

## Claims

1. A recovery unit (RU) in an electronic payment transaction system (TS), the recovery unit (RU) comprising means for receiving and storing a plurality of token recovery data sets (TRD), each token recovery data set (TRD) being uniquely assigned to one or more tokens (T) being managed by one of a plurality of secure transaction units (TU) at the time of generating the respective token recovery data set (TRD), wherein the token recovery data set (TRD) is read to block and/or to recover the one or more tokens (T) upon request.

2. The recovery unit (RU) of claim 1, wherein the recovery unit (RU) is a financial service provider unit (SPU) further configured to issue and/or manage at least the one of the plurality of secure transaction units (TU), preferably to issue and/or manage a subset of the plurality of secure transaction units (TU), more preferably to issue and/or manage the plurality of secure transaction units (TU).

3. The recovery unit (RU) of claim 2, wherein the token recovery data set (TRD) is read by the financial service provider unit (SPU) upon request from the participant in the electronic payment transaction system (TS) to whom the one of a plurality of secure transaction units (TU) is assigned.

4. The recovery unit (SU) of one of the preceding claims, wherein each token recovery data set comprises one or more token references that are uniquely assigned to the one or more tokens (T) at the time of generating the token recovery data set, the recovery data set (TRD) preferably further comprising a secure transaction unit identifier for uniquely identifying the at least one secure transaction unit (TU).

5. The recovery unit (SU) of one of the preceding claims, wherein the token recovery data set is signed with a private key of a token (T) of the one or more tokens (T) that is to be blocked and/or recovered.

6. The recovery unit (SU) of one of the preceding claims, wherein the token recovery data set (TRD) is updated when:
- a registration request (RR) is sent to a token reference register (T-Reg); and/or
- a payment transaction involving the secure transaction units (TU) is performed in the electronic payment transaction system (TS); and/or
- an update command is received from the secure transaction units (TU).

7. The recovery unit (RU) of one of the preceding claims being a financial service provider unit (SPU) and being configured to generate a registration request (RR) concerning a token (T) to be blocked for a token reference register (T-Reg), wherein the registration request (RR) comprises a switch command that is signed with a private key of the financial service provider unit (SPU).

8. A secure transaction unit (TU) configured to perform electronic payment transactions for a participant in an electronic payment system (TS), the secure transaction unit (TU) comprising:
- means for receiving and transmitting one or more tokens (T) to one or more other secure transaction unit (TU) in the electronic payment transaction system (TS) to cause an exchange of the one or more tokens (T) between secure transaction units (TU) in the electronic transaction system (TS), wherein each token (T) comprises at least a monetary value (v) and a private key (r) of a token-individual key pair;
- means for generating one or more token recovery data sets (TRD), each token recovery data set (TRD) being uniquely assigned to one or more tokens (T) being managed by the secure transaction unit (TU) at the time of generating the token recovery data set (TRD),
- means for transmitting the one or more token recovery data sets (TRD) to a recovery unit (RU), the recovery unit (RU) being managed by the participant or by a service provider unit (SPU), preferably being a recovery unit (RU) according to one of the preceding claims.

9. The secure transaction unit (TU) of claim 8, further comprising
- means for transmitting one or more registration requests (RR) to a token reference register (T-Reg) of the electronic transaction system (TS), wherein each registration request (RR) comprises one or more token references (TR), each token reference (TR) being uniquely assigned to a token (T) in the electronic payment transaction system (TS), wherein one or more token references (TR) of a registration request (RR) comprises the monetary value (v) of the assigned token (T) and a public key (R) corresponding to the private key (r) of the token-individual key pair.

10. The secure transaction unit (TU) of claims 8 or 9, wherein token references (TR) assigned to tokens (T) of the secure transaction unit (TU) and currently residing in the secure transaction unit (TU) are transmitted as the token recovery data set (TRD) to the recovery unit (RU).

11. The secure transaction unit (TU) of any of the claims 8 to 10, wherein the means for generating one or more token recovery data sets (TRD) are further configured to generate a void registration request (RR) to the service provider unit (SPU) or the token reference register (T-Reg), the void registration request (RR) being signed with the private key of the token (T) being part of the token recovery data set (TRD).

12. The secure transaction unit (TU) of any of the claims 8 to 11, wherein the means for generating one or more token recovery data sets (TRD) are further configured to generate each token recovery data set (TRD) as a list of token references (TR) of one or more tokens currently managed by the secure transaction unit (TU).

13. The secure transaction unit (TU) of any of the claims 8 to 12, further configured to generate protocol data related to payment transactions performed between the secure transaction unit (TU) and other secure transaction units (TU), wherein the protocol data being sent to a protocol data register (P-Reg) in the electronic payment transaction system (TS).

14. An electronic payment transaction system (TS) comprising:
a plurality of secure transaction units (TU) according to one of the claims 8 to 13;
a plurality of recovery units (RU) each being a financial service provider (SPU) according to one of the claims 2 to 7 and storing a plurality of token recovery data sets (TRD);
one or more token registers (T-Reg) for registering tokens (T) in the electronic transaction system (TS);
one or more protocol data registers (P-Reg) for storing protocol data of payment transactions performed between secure transaction units (TU).

15. The electronic payment transaction system (TS) of claim 14, wherein upon recovery request from a participant of the electronic payment transaction unit, the respective token recovery data set (TRD) in the recovery unit (RU) is read by the financial service provider (SPU) and one or more registration requests (RR) concerning one or more tokens (T) to be blocked being generated by the service provider unit (SPU) to be transmitted to the one or more token reference registers (T-Reg), wherein each registration requests (RR) comprises a switch command that is signed with a private key of the financial service provider unit (SPU).

16. The electronic payment transaction system (TS) of claim 15, wherein upon recovery request from a participant of the electronic payment transaction unit and a predefined time period being lapsed, the service provider unit is configured to provide new tokens to the participant.

17. A token reference register (T-Reg) comprising:
- one or more storage units (1) for storing token references (TR) for registering tokens (T) in the electronic payment transaction system (TS), wherein each token (T) comprises at least a monetary value (v) and a private key (r) of a token-individual key pair;
- one or more fraud detection units (2) for storing token references (TR) based on a recovery request (33) for registering tokens to be recovered (T) in the electronic payment transaction system (TS);
- wherein each stored token reference (TR) in the token reference register (T-Reg) comprises the monetary value (v) of the token (T) and a public key (R) corresponding to the private key (r) of the token-individual key pair; and
- wherein at least a subgroup of token references (TR) in the token reference register (T-Reg) preferably further comprises a transaction unit group identifier (TUGI) as a token reference element.
